# EUROPÄISCHE PATENTSCHRIFT

(11) **EP 0 880 928 B1**
(45) Veröffentlichungstag und Bekanntmachung des Hinweises auf die Patenterteilung: **26.02.2003**
(21) Anmeldenummer: 98109624.1
(22) Anmeldetag: 27.05.1998
(51) Int. Cl.: A47J 37/07

(54) **Holzkohlegrill**
Charcoal barbecue
Gril au charbon de bois

(30) Priorität: 30.05.1997 DE 19722696
(43) Veröffentlichungstag der Anmeldung: 02.12.1998
(73) Patentinhaber: Auler, Jürgen, 49419 Wagenfeld (DE)
(72) Erfinder: Auler, Jürgen, 49419 Wagenfeld (DE)
(74) Vertreter: Braun, Dieter, Dipl.-Ing.

(56) Entgegenhaltungen:
- WO-A-87/05197
- DE-A- 3 137 522
- DE-A- 19 515 080
- DE-U- 29 507 352
- DE-U- 29 715 854
- FR-A- 2 288 504
- US-A- 2 891 465
- US-A- 3 742 838
- US-A- 4 884 554

## Beschreibung

Die Erfindung bezieht sich auf einen Holzkohlegrill unter dessen Grillrost, in dessen voller Ausdehnung ein Fettauffangkasten angeordnet ist und mit seitlich des Fettauffangkastens angeordneten Kohleaufnahmen, wobei von den Kohleaufnahmen kaminartige Heißluftführungen innerhalb von Außenwänden an den Grillrost geführt sind.

Bei den bekannten Holzkohlegrills ist es nachteilig, daß aus dem Grillgut austretendes Fett auf die auf den darunter befindlichen Kohlerost liegende Holzkohle tropft. Als Folge kommt es zu einer störenden Rauchentwicklung, und es bilden sich gesundheitsschädliche Stoffe, wie krebserregende Benzopyrene. Obgleich dieser Umstand bekannt ist, zeigt die Praxis, daß eine sachgemäße Handhabung der bekannten Grills äußerst schwierig ist. Aus diesem Grunde haben sich auch zunehmend Gas- und Elektrogrills durchgesetzt, die jedoch andere Nachteile aufweisen. Im übrigen kommt es bei einer unsachgemäßen Handhabung relativ schnell zu einem Verbrennen der Unterseite des Grillgutes.

Durch die DE-A 195 15 080 ist auch bereits ein Holzkohlegrill bekannt geworden, bei dem es durch die Anordnung von einer unterhalb des Grillrostes angeordneten Fettwanne und von zwei seitlich der Fettwanne parallel zueinander angeordneten Kohlerinnen sichergestellt ist, daß aus dem Grillgut austretendes Fett nicht auf den Kohlerost tropfen kann. Hier ist es ist jedoch nachteilig, daß Heißluft dem Grillrost ungleichmäßiger Verteilung zugeführt wird. Das auf den Grillrost abgelegte Grillgut wird an dessen oberhalb der Kohlerinnen befindlichen Seiten deutlich intensiver gegart, als in der Mitte des Grillrostes. Der Grillrost überfordert folglich sehr leicht den Bediener und verlangt zumindest dessen ganze Aufmerksamkeit. Zudem sind hier Kohlenrinnen vorgesehen, in die Außenluft über in den Außenwandungen angeordnete Löcher eintritt. Eine intensive Durchströmung mit Luft ist hier behindert.

Außerdem ist zumindest nicht auszuschließen, daß Glut aus den benachbarten Kohlerinnen in die Fettwanne gelangt, so daß sich das dort befindliche Fett entzünden kann. Dieses wäre in Verbindung mit dem Kaminsystem des Grills mit der Ausbildung einer gefährlichen großen Flamme verbunden.

Der Erfindung liegt die Aufgabe zugrunde, einen Holzkohlegrill zu schaffen, der die genannten Nachteile nicht aufweist und der sich zudem durch eine verbesserte Ausnutzung der bei der Verbrennung der Holzkohle freigesetzten Wärme auszeichnet.

Diese Aufgabe wird durch die Merkmale des Anspruchs 1 gelöst. Die weitere Ausgestaltung der Erfindung ist den Unteransprüchen zu entnehmen.

Indem an den Außenwänden, im Bereich oberhalb der Kohleaufnahmen in den Heißluftführungen etwa parallel verlaufende, an den Grillrost geführte äußere Luftkanäle mit Lufteintrittsöffnungen angeordnet und die Heißluftführungen mit in die äußeren Luftkanäle einmündenden Überströmöffnungen versehen sind, ist es unter Einsatz einfacher Mittel gelungen, die Heißluftverteilung am Grillrost derart zu optimieren, daß eine für einen unproblematischen Grillbetrieb erforderliche gleichmäßige Heißluftverteilung erzielt wird. Die Heißluftführung und die Luftkanäle bewirken eine exakte Führung der Heißluft an den Grillrost. Wärmeverluste durch eine seitliche Abstrahlung oder seitliches Entweichen von Heißluft werden so minimiert. Außerdem werden durch die äußeren Luftkanäle die Außenwände des Grills gekühlt. Zudem bewirken die äußeren Luftkanäle bei Bedarf eine verstärkte Luftströmung auch in den Heißluftführungen, die in vorteilhafter Weise zu einer verstärkten Beaufschlagung des Grillgutes mit Heißluft führt.

Gemäß einer bevorzugten Ausführungsform der Erfindung ist es vorgesehen, daß der Öffnungsquerschnitt der Lufteintrittsöffnungen mittels Stellmittel einstellbar ist. Vorzugsweise ist der Öffnungsquerschnitt der äußeren Luftkanäle durch ein Verschwenken der Oberteile der Außenwände einstellbar. Hierdurch wird erreicht, daß die Intensität des Grillvorganges über eine Dosierung der Heißluftmenge auf einfache Weise bedarfsgerecht gesteuert werden kann.

Vorteilhaft ist es außerdem, wenn die Kohleaufnahmen von in den Heißluftführungen angeordneten Rosten gebildet sind, derart, daß die Rosten von Luft durch- und umströmbar sind. Es ergibt sich so ein großflächiger Kontakt der Luftströmung mit der glühenden Holzkohle und somit ein optimaler Wärmeübergang. Dieser Effekt wird dadurch verstärkt, indem die Roste nach innen geneigt angeordnet sind und innenseitig nach oben in Richtung der Luftströmung in den Heißluftführungen abgewinkelte Schenkel aufweisen.

Im Rahmen der Erfindung ist es weiterhin vorgesehen, daß die Heißluftführungen nach außen klappbar angeordnet sind, wodurch erreicht wird, daß die Seitenroste zugänglich sind. Es ist somit möglich, die Seitenroste mit Holzkohle zu befüllen und zur Reinigung zu entnehmen.

Vorteilhaft ist es, wenn von den Seitenrosten schräg nach innen geführte Außenwandungen in den Aschekasten geführt sind und daß der Aschekasten unter dem Fettauffangkasten angeordnet ist. Es ergibt sich somit die Möglichkeit, lediglich einen Aschekasten anzuordnen, der zudem unter dem Fettauffangkasten angeordnet ist, so daß kein Fett in den Aschekasten gelangen kann.

Im Rahmen der Erfindung ist es weiterhin vorgesehen, daß an den Seitenrosten zugewandten Seiten des Fettauffangkastens Funkenschutzgitter angeordnet sind. Hierdurch wird eine Entzündung des im Fettauffangkasten befindlichen heißen Fettes durch Funkenflug verhindert.

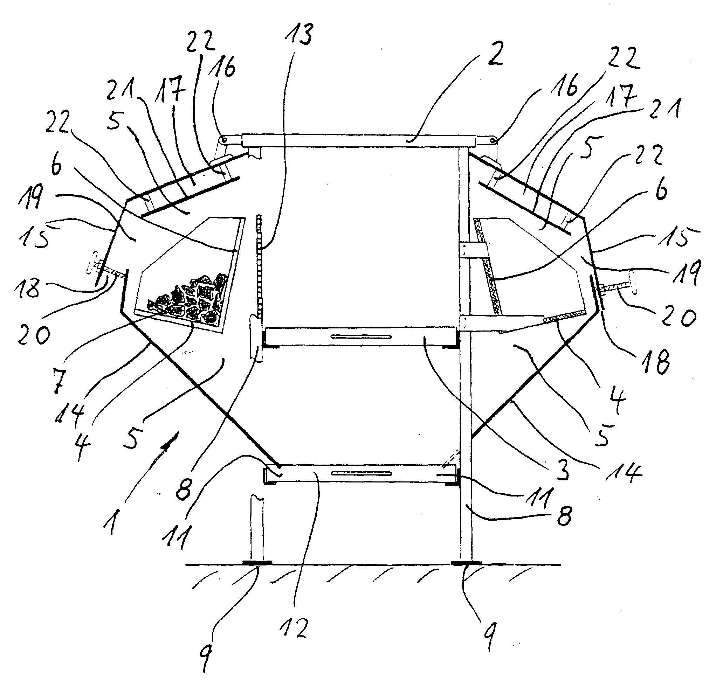

In der Zeichnung ist ein Ausführungsbeispiel der Erfindung dargestellt und wird im folgenden näher beschrieben. Die Figur der Zeichnung zeigt den Holzkohlegrill im Querschnitt, in schematischer Darstellung.

In der Zeichnung ist mit 1 ein Holzkohlegrill bezeichnet. Der Holzkohlegrill 1 weist einen Grillrost 2 auf, unter dem ein Fettauffangkasten 3 angeordnet ist. In einer Ebene unterhalb des Grillrostes 2 sind zu diesem seitlich versetzt zwei Seitenroste 4 angeordnet. Die den Kohlerost bildenden Seitenroste 4 sind in Heißluftführungen 5 nach innen geneigt angeordnet. Die Seitenroste 4 weisen innenseitig in Richtung der Luftströmung in der Heißluftführung 5 nach oben abgewinkelte Schenkel 6 auf. Auf den Seitenrosten 4 befindet sich Holzkohle 7. Der Holzkohlegrill 1 weist ein Gestell 8 auf, an dem die Seitenroste 4 befestigt sind. Das Gestell 8 ist mit Standflächen 9 versehen.

Die Heißluftführungen 5 sind beidseitig am Holzkohlegrill 1 angeordnet, sowie kaminartig ausgebildet an den Grillrost 2 geführt und weisen dort Heißluftaustritte auf. An der Unterseite tritt die Luft über Öffnungen 11 im Bereich des unterhalb des Fettaufangkastens 3 angeordneten Aschekastens 12 in die Heißluftführungen 5 ein. An den den Seitenrosten 4 zugewandten Seiten des Fettauffangkastens 3 sind, an die Heißluftführungen 5 angrenzend, Funkenschutzgitter 13 angeordnet.

Die Heißluftführungen 5 weisen Außenwände 14 auf, deren Oberteile 15 an Scharnieren 16 am Gestell 8 befestigt und nach außen klappbar angeordnet sind. Hierdurch sind die Seitenroste 4 zugänglich.

An den Oberteilen 15 der Außenwände 14 der Heißluftführungen 5 sind etwa parallel verlaufende, an den Grillrost 2 geführte äußere Luftkanäle 17 mit Lufteintrittsöffnungen 18 angeordnet. Die Luftkanäle 17 sind von den Heißluftführungen durch Wandungen 21 abgetrennt. Die Wandungen 21 sind mittels Stege 22 an den Oberteilen 15 der Außenwände 14 der Heißluftführungen 5 innenseitig befestigt. Die Heißluftführungen 5 sind im Bereich oberhalb der Seitenroste 4 mit in die äußeren Luftkanäle 17 einmündenden Überströmöffnungen 19 versehen. Der Öffnungsquerschnitt der äußeren Luftkanäle 17 ist im Bereich der Lufteintrittsöffnungen 18 mittels Stellmittel 20, durch die die Oberteile 15 der Außenwände 14 der Heißluftführungen 5 verschwenkbar sind, einstellbar.

Im Betrieb des Holzkohlegrills 1 tritt über die Öffnungen 11 im Bereich des Aschekastens 12 Frischluft von unten in den Grill ein und gelangt in der Heißluftführung 5 an die Seitenroste 4, auf denen sich die glühende Holzkohle 7 befindet. Die an den Heißluft-führungen 5 befindliche Luft wird hier durch die glühende Holzkohle 7 erhitzt, und es stellt sich aufgrund der Erwärmung, ein Kamineffekt, d. h. eine intensive, nach oben gerichtete Luftströmung ein. Die Luft passiert dabei die Holzkohle 7 zusätzlich im Bereich einer großen Kontaktfläche, entlang der abgewinkelten Schenkel 6 der Seitenroste 4. Hieraus ergibt sich eine sehr intensive Aufheizung der Luft in der Heißluftführung 5.

Die Luft wird schließlich durch die Wandungen 21 von zwei Seiten an den Grillrost 2 geführt. Zusätzlich gelangt ein Teil der an den Seitenrosten 4 aufgeheizten Luft über die überström öffnungen 19 in die Luftkanäle 17. In die Luftkanäle 17 kann je nach Bedarf über die tiefer gelegenen Lufteintrittsöffnungen 18 zusätzlich Frischluft eingeleitet werden. Dieses hat zur Folge, daß dann von der in die Luftkanäle 17 einströmenden Luft zusätzlich Heißluft aus den Heißluftführungen 5 über die Überströmöffnungen 19 in die Luftkanäle 17 gesaugt wird und an den Grillrost 2 gelangt. Die Intensität der zusätzlichen Luftzuführung in die Luftkanäle 17 kann mittels der Stellmittel 20 durch Einstellen des Querschnittes der Lufteintrittsöffnungen 18 reguliert werden. Im Bereich des Grillrostes 2 kann im übrigen auch ein in der Zeichnung nicht dargestellteter Drehspieß für das Grillgut angeordnet sein.

Insgesamt ergibt sich in der Heißluftführung 5 ein kaminartiger Effekt, der durch eine Lufteinleitung über die Lufteintrittsöffnungen 18 in die Luftkanäle 17 bei Bedarf verstärkt werden kann. Es ist so möglich, die Heizleistung des Holzkohlegrills 1 zu regeln und je nach Bedarf einzustellen. Insgesamt bewirkt die erfindungsgemäße Heißluftführung daß die bei der Verbrennung frei werdende Heizenergie der Holzkohle 7 gegenüber herkömmlichen Systemen bedeutend besser ausgenutzt wird. Der Holzkohlegrill 1 zeichnet sich auch dadurch aus, daß eine seitliche Wärmeableitung im wesentlichen unterbunden ist. Die gesamte erzeugte Heißluft muß den Holzkohlegrill 1 passieren. Durch die spezielle Luftführung wird auch in die Außenwände 14 gelangte Wärme der Heißluft zugeführt. Hier sind insbesondere auch die äußeren Luftkanäle 17 sehr wirkungsvoll.

Wesentlich ist es im übrigen, daß von dem auf dem Grillrost 2 abgelegten Grillgut keinerlei Fett auf die Seitenroste 4 gelangen kann. Dieses Fett wird vielmehr von dem Fettauffangkasten 3 aufgefangen. Es kann folglich auch nicht auf etwa im Aschekasten 12 befindliche heiße Asche abtropfen. Somit wird stets sicher verhindert, daß es durch abtropfendes Fett zu einem Auflodern von Flammen kommen kann, daß eine störende Rauchentwicklung erfolgt und daß gesundheitsschädliche Stoffe, wie z. B. Benzopyrene, entstehen und an das Grillgut gelangen. Da das Grillgut ausschließlich mit Heißluft beaufschlagt wird und einer direkten Einwirkung der Glut der Holzkohle bzw. aufgrund abtropfenden Fettes aufsteigender Flammen nicht ausgesetzt ist, erfolgt der Grillvorgang sehr gleichmäßig und schonend. Insbesondere kommt es nicht zu einem vorzeitigen Verkohlen der Unterseite des Grillgutes. Gegrilltes Fleisch zeichnet sich durch einen hervorragenden Geschmack aus.

## Patentansprüche

1. Holzkohlegrill (1) unter dessen Grillrost (2), in dessen voller Ausdehnung ein Fettauffangkasten (3) angeordnet ist und mit seitlich des Fettauffangkastens (3) angeordneten Kohleaufnahmen (4), wobei von den Kohleaufnahmen kaminartige Heißluftführungen (5) innerhalb von Außenwänden (14) an den Grillrost (2) geführt sind, **dadurch gekennzeichnet, daß** an den Außenwänden (14) im Bereich oberhalb der Kohleaufnahmen (4) in den Heißluftführungen (5) etwa parallel verlaufende, an den Grillrost (2) geführte äußere Luftkanäle (17) mit Lufteintrittsöffnungen (18) angeordnet sind und daß die Heißluftführungen (5) mit in die äußeren Luftkanäle (17) einmündenden Überströmöffnungen (19) versehen sind.

2. Holzkohlegrill (1) nach Anspruch 1, **dadurch gekennzeichnet, daß** der Öffnungsquerschnitt der Lufteintrittsöffnungen (18) mittels Stellmittel (20) einstellbar ist.

3. Holzkohlegrill (1) nach den Ansprüchen 1 und 2, **dadurch gekennzeichnet, daß** der Öffnungsquerschnitt der äußeren Luftkanäle (17) durch ein Verschwenken der Oberteile (15) der Außenwände (14) einstellbar ist.

4. Holzkohlegrill (1) nach Anspruch 1 und einem oder mehreren der weiteren Ansprüche, **dadurch gekennzeichnet, daß** die Kohleaufnahmen von in den Heißluftführungen (5) angeordneten Rosten (4) gebildet sind, derart, daß die Rosten (4) von Luft durch- und umströmbar sind.

5. Holzkohlegrill (1) nach Anspruch 1 und einem oder mehreren der weiteren Ansprüche, **dadurch gekennzeichnet, daß** die Roste (4) nach innen geneigt angeordnet sind und innenseitig nach oben in Richtung der Luftströmung in der Heißluftführung (5) abgewinkelte Schenkel (6) aufweisen.

6. Holzkohlegrill (1) nach Anspruch 1 und einem oder mehreren der weiteren Ansprüche, **dadurch gekennzeichnet, daß** an den Rosten (4) zugewandten Seiten des Fettauffangkastens (3), an die Heißluftführungen (5) angrenzend, Funkenschutzgitter (13) angeordnet sind.

7. Holzkohlegrill (1) nach Anspruch 1 und einem oder mehreren der weiteren Ansprüche, **dadurch gekennzeichnet, daß** die Außenwandungen (14) unterhalb der Rosten (4) schräg nach innen in einen unter dem Fettauffangkasten (3) angeordneten Aschekasten (12) geführt sind.

8. Holzkohlegrill (1) nach Anspruch 1, **dadurch gekennzeichnet, daß** Oberteile (15) der Außenwände (14) der Heißluftführungen (5) nach außen klappbar angeordnet sind, derart, daß die Roste (4) zugänglich sind.

9. Holzkohlegrill (1) nach Anspruch 1 und einem oder mehreren der weiteren Ansprüche, **dadurch gekennzeichnet, daß** im Bereich des Grillrostes (2) ein Drehspieß angeordnet ist.

## Claims

1. Charcoal barbecue (1) with a fat collecting box (3) arranged below, and over the full extent of the barbecuing grid (2), and with charcoal receivers (4) arranged to the side of the fat collecting box (3), chimney-like hot air guides (5) being guided inside external walls (14) from the charcoal receivers to the barbecuing grid (2), **characterised in that** outer air ducts (17) with air inlet apertures (18) extending roughly parallel and guided to the barbecuing grid (2) are arranged on the external walls (14) in the region above the charcoal receivers (4) in the hot air guides (5) and **in that** the hot air guides (5) are provided with overflow apertures (19) opening into the outer air ducts (17).

2. Charcoal barbecue (1) according to claim 1, **characterised in that** the aperture cross-section of the air inlet apertures (18) can be adjusted by adjusting means (20).

3. Charcoal barbecue (1) according to claims 1 and 2, **characterised in that** the aperture cross-section of the outer air ducts (17) can be adjusted by pivoting the upper parts (15) of the external walls (14).

4. Charcoal barbecue (1) according to claim 1 and one or more of the further claims, **characterised in that** the charcoal receivers are formed by grids (4) arranged in the hot air guides (5) in such a way that air can flow through and round the grids (4).

5. Charcoal barbecue (1) according to claim 1 and one or more of the further claims, **characterised in that** the grids (4) are arranged tilted inward and on the inside at the top have legs (6) angled in the direction of the air flow in the hot air guide (5).

6. Charcoal barbecue (1) according to claim 1 and one or more of the further claims, **characterised in that** spark protection gratings (13) are arranged adjacent to the hot air guides (5) on the sides of the fat collecting box (3) facing the grids (4).

7. Charcoal barbecue (1) according to claim 1 and one or more of the further claims, **characterised in that** the external walls (14) below the grids (4) are guided obliquely inward into an ash box (12) arranged under the fat collecting box (3).

8. Charcoal barbecue (1) according to claim 1, **characterised in that** upper parts (15) of the external walls (14) of the hot air guides (5) are arranged so as to be foldable outward in such a way that the grids (4) are accessible.

9. Charcoal barbecue (1) according to claim 1 and one or more of the further claims, **characterised in that** a rotary spit is arranged in the region of the barbecuing grid (2).

## Revendications

1. Gril au charbon de bois (1), sous la grille (2) duquel est agencée une boîte de réception des graisses (3) sur toute son étendue, et comportant des bacs à charbon (4) disposés latéralement par rapport à la boîte de réception des graisses (3), dans lequel des conduits d'air chaud (5) en forme de cheminée sont ménagés à partir du bac à charbon à l'intérieur des parois externes (14) vers la grille de gril (2), **caractérisé en ce que**, en regard des parois externes (14), dans la zone au-dessus des bacs à charbon (4) dans les conduits d'air chaud (5), des conduits d'air extérieurs (17) sont agencés, s'étendant quasi-parallèlement vers la grille de gril (2) avec des ouvertures d'entrée d'air (18) et **en ce que** les conduits d'air chaud (5) sont pourvus d'ouvertures d'admission d'air (19) débouchant dans les conduits d'air extérieurs (17).

2. Gril au charbon de bois (1) selon la revendication 1, **caractérisé en ce que** la section transversale d'ouverture des ouvertures d'entrée d'air (18) est réglable à l'aide d'un moyen de réglage (20).

3. Gril au charbon de bois (1) selon la revendication 1 ou 2 **caractérisé en ce que** la section transversale d'ouverture des conduits d'air extérieurs (17) est réglable par une modification de l'orientation de la partie supérieure (15) des parois externes (14).

4. Gril au charbon de bois (1) selon la revendication 1 et selon l'une ou plusieurs des revendications suivantes, **caractérisé en ce que** les bacs à charbon sont formés de grilles (4) disposées dans les conduits d'air chaud (5), de sorte que les grilles (4) peuvent être traversées et environnées d'écoulement d'air.

5. Gril au charbon de bois (1) selon la revendication 1 et selon l'une ou plusieurs des revendications suivantes, **caractérisé en ce que** les grilles (4) sont disposées inclinées vers l'intérieur et présentent une aile (6) formant un angle avec la direction d'écoulement de l'air dans le conduit d'air chaud (5).

6. Gril au charbon de bois (1) selon la revendication 1 et selon l'une ou plusieurs des revendications suivantes, **caractérisé en ce que** des grilles pare-étincelles adjacentes aux conduits d'air chaud (5) sont disposées sur les côtés de la boîte de réception des graisses (3) orientés vers les grilles (4).

7. Gril au charbon de bois (1) selon la revendication 1 et selon l'une ou plusieurs des revendications suivantes, **caractérisé en ce que** les parois externes (14), en dessous des grilles (4), sont amenées de biais vers l'intérieur dans un bac à cendres (12) disposé en dessous de la boîte de réception des graisses (3).

8. Gril au charbon de bois (1) selon la revendication 1 **caractérisé en ce que** les parties supérieures (15) des parois externes (14) des conduits d'air chaud (5) sont agencées pour être rabattables vers l'extérieur de telle sorte que les grilles (4) sont accessibles.

9. Gril au charbon de bois (1) selon la revendication 1 et selon l'une ou plusieurs des revendications suivantes, **caractérisé en ce que** dans la zone de la grille de gril (2), est disposée une broche rotative.
